(19) Europäisches Patentamt / European Patent Office / Office européen des brevets

(11) **EP 2 096 926 B1**

(12) **FASCICULE DE BREVET EUROPEEN**

(45) Date de publication et mention de la délivrance du brevet:
**06.04.2016 Bulletin 2016/14**

(21) Numéro de dépôt: **07871858.2**

(22) Date de dépôt: **13.12.2007**

(51) Int Cl.:
*A01N 63/04* (2006.01)    *A01P 7/04* (2006.01)

(86) Numéro de dépôt international:
**PCT/FR2007/002066**

(87) Numéro de publication internationale:
**WO 2008/087294 (24.07.2008 Gazette 2008/30)**

(54) **UTILISATION DU CHAMPIGNON ENTOMOPATHOGENE BEAUVERIA BASSIANA COMME MOYEN DE LUTTE BIOLOGIQUE CONTRE PAYSANDISIA ARCHON**

VERWENDUNG VOM ENTOMOPATHOGENEN PILZ BEAUVERIA BASSIANA ALS BIOLOGISCHES MITTEL GEGEN PAYSANDISIA ARCHON

USE OF THE ENTOMOPATHOGENIC FUNGI BEAUVERIA BASSIANA AS A MEANS FOR THE BIOLOGICAL CONTROL OF PAYSANDISIA ARCHON

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **13.12.2006 FR 0610867**

(43) Date de publication de la demande:
**09.09.2009 Bulletin 2009/37**

(73) Titulaire: **Natural Plant Protection 64150 Nogueres (FR)**

(72) Inventeurs:
• **Besse, Samantha**
  **F-64420 Eslourenties Daban (FR)**
• **Bonhomme, Antoine**
  **F-64140 Billere (FR)**

(74) Mandataire: **Gevers & Orès**
  **36 rue de Saint-Pétersbourg**
  **75008 Paris (FR)**

(56) Documents cités:
EP-A1- 1 297 746    WO-A-02/28189
US-A- 5 227 396    US-A- 5 516 513

• SERGIO MONTAGUD ALARIO: "PAYSANDISIA ARCHON (BURGMEISTER, 1880) (LEPIDOPTERA, CASTNIIDAE), NUEVA LOCALIZACIONES EN LA PENÍNSULA IBÉRICA Y SU GESTIÓN" BOL. S.E.A., vol. 34, 2004, pages 237-246, XP002442680

• "Paysandisia... un autre moyen d'éradication en vue..."[Online] 16 août 2006 (2006-08-16), pages 1-2, XP002442681 Extrait de l'Internet: URL:http://fr.groups.yahoo.com/group/Palmiers/message/8626> [extrait le 2007-07-16]
• "Paysandisia archon"[Online] 27 mai 2006 (2006-05-27), page 1-6, XP002442682 Extrait de l'Internet: URL:http://palmae.free.fr/paysandisia_archon.htm> [extrait le 2007-07-16]
• DATABASE CAPLUS [Online] CHEMICAL ABSTRACTS SERVICE, COLUMBUS, OHIO, US; GAFUROVA, V. L. ET AL: "Effect of endotoxins of entomopathogenic fungi on their virulence" XP002442688 extrait de STN Database accession no. 1980:632664 & MIKROBIOLOGICHESKII ZHURNAL (1978-1993) , 42(5), 591-5 CODEN: MZHUDX; ISSN: 0201-8462, 1980,
• DATABASE CAPLUS [Online] CHEMICAL ABSTRACTS SERVICE, COLUMBUS, OHIO, US; FORNELLI, FRANCESCA ET AL: "Cytotoxicity of fungal metabolites to lepidopteran (Spodoptera frugiperda) cell line (SF-9)" XP002442689 extrait de STN Database accession no. 2004:261347 & JOURNAL OF INVERTEBRATE PATHOLOGY , 85(2), 74-79 CODEN: JIVPAZ; ISSN: 0022-2011, 2004,

EP 2 096 926 B1

- **DATABASE CAPLUS [Online] CHEMICAL ABSTRACTS SERVICE, COLUMBUS, OHIO, US; VILCINSKAS, A. ET AL: "Effects of beauverolide L and cyclosporin A on humoral and cellular immune response of the greater wax moth, Galleria mellonella" XP002442690 extrait de STN Database accession no. 1999:77003 & COMPARATIVE BIOCHEMISTRY AND PHYSIOLOGY, PART C: PHARMACOLOGY, TOXICOLOGY & ENDOCRINOLOGY , 122C(1), 83-92 CODEN: CBPCEE; ISSN: 0742-8413, 1999,**

## Description

La présente invention se rapporte au domaine technique de la lutte biologique contre les insectes nuisibles. Elle concerne plus particulièrement l'utilisation du champignon entomopathogène *Beauveria bassiana* pour lutter contre *Paysandisia archon,* un papillon ravageur des palmiers.

Le papillon *Paysandisia archon* est un lépidoptère ravageur des palmiers appartenant à la famille des *Castniidae,* sous-famille des *Castniinae.* Cet insecte palmivore est originaire d'Argentine et d'Uruguay. En Argentine, *P. archon* s'attaque aux palmiers locaux tels que *Trithrinax campestris* et *Butia yatay,* ainsi qu'à des espèces exotiques telles que *Latania, Chamaerops,* ou *Phoenix canariensis* (Drescher et Dufay, 2002).

Peu étudié, cet insecte fait peu de dégâts sur le continent sud-américain. Il semblerait qu'un ennemi naturel maintienne sa population en équilibre, bien qu'aucun lien factuel n'ait été mis en évidence entre *P. archon* et un supposé ennemi naturel (Sarto I Monteys et Aguilar, 2005). Il pourrait s'agir d'un oiseau (par exemple pie, moqueur ou *Mimus saturninus*) ou d'un insecte (par exemple un ichneumonidé du genre *ophion*). Ainsi, Sarto I Monteys et Aguilar (2005) rapportent que des larves de nématodes, de mites et de mouches ont été observées dans un cadavre de larve de *P. archon.* Toujours selon Sarto I Monteys et Aguilar, 2005, les caractéristiques morphologiques de certains oeufs de *P. archon* suggèrent la possibilité qu'ils soient parasités par des hyménoptères ou des hémiptères. Toutefois, ces études ne permettent pas de déterminer avec certitude s'il existe effectivement un ennemi naturel de *P. archon.*

Au cours des années 1990, *Paysandisia archon* a été introduit accidentellement en Espagne et en France par des importations de palmiers adultes en provenance d'Argentine.

Depuis son introduction, le papillon se propage en Europe à la fois par le vol des adultes (dispersion naturelle) et par le transport des palmiers infestés, assurant la dissémination du nuisible sur de longues distances.

Actuellement, la zone de distribution de l'insecte en Europe concerne essentiellement le sud de l'Espagne, le sud de l'Italie et la France. En France, elle touche de nombreux départements du sud et de l'ouest. Ainsi, *Paysandisia archon* a été détecté dans le Var (1999), l'Hérault (2001) et toute la côte du Roussillon, en Midi-Pyrénées (2004) et dans la ville de Rennes (2006).

Des études réalisées en France suggèrent que ce papillon possède un long cycle de développement (Drescher et Dufay, précité) : les adultes, actifs pendant le jour, sont observés de juin à septembre. *P. archon* pond ses oeufs sur les feuilles de palmier. Les larves (chenilles) creusent des galeries dans le stipe (tronc) ou dans les nouvelles feuilles, et se nourrissent ensuite du coeur du palmier. Résistantes au froid, elles passent au stade de chrysalide grâce à un cocon confectionné à l'intérieur des galeries avec des fibres de palmes. A la fin de son développement, le papillon adulte se libère de l'enveloppe au niveau de l'extrémité du cocon située en regard de la sortie de la galerie. Les dégâts observés sur le palmier sont caractéristiques du passage de *P. archon* (Sarto I Monteys et Aguilar, 2005) :

- présence de sciure sur la base de la couronne et/ou du stipe ;
- palmes perforées ou grignotées ;
- présence de galeries axiales et transversales dans le stipe ;
- développement anormal de bourgeons axillaires ;
- déformation ou torsion (vrille) anormale du stipe ;
- dessèchement anormal des palmes, et notamment des feuilles centrales ;

Le dépérissement du palmier intervient dans un laps de temps variable, qui dépend du nombre de larves. Lorsque celles-ci sont nombreuses, la mort peut intervenir à assez brève échéance (1 à 2 ans).

Outre les espèces originaires d'Amérique du sud, telles que celles mentionnées plus haut, les hôtes connus en France de *P. archon* sont notamment les espèces suivantes : *Chamaerops humilis, Livistona chinensis, L. decipiens, L. saribus, Sabal spp., Phoenix canariensis, P. dactylifera, P. reclinata, Trachycarpus fortunei,* et *Washingtonia filifera* (Drescher et Dufay, 2001). En Espagne, le papillon a été observé sur *Trachycarpus fortunei, Phoenix canariensis, Washingtonia spp.* et *Chamaerops humilis* (Aguilar, 2001).

Les espèces *Trachycarpus fortunei* (ou *Chamaerops excelsa,* palmier de Chine) et *Chamaerops humilis* (palmier nain) sont particulièrement sensibles car elles possèdent un coeur tendre et les fibres de leur stipe facilitent la ponte des oeufs.

Un grand nombre de palmeraies, certaines d'une grande valeur historique, sont actuellement menacées en Europe, et de nombreuses villes doivent prendre des mesures d'arrachage.

Outre les palmiers, d'autres végétaux ont été décrits comme pouvant être la cible de *Paysandisia archon.* En effet, des attaques contre des céréales telles que le maïs ou encore contre des plantes ornementales, telles que des yuccas ou des cannes provençales, ont été observées.

Les moyens de lutte contre *Paysandisia archon* sont encore assez limités et peu efficaces. En effet, selon Sarto I Monteys et Aguilar (précité) :

- les larves sont presque exclusivement endophages, ce qui rend l'usage d'insecticides beaucoup moins efficace que lorsqu'ils sont utilisés pour lutter contre des insectes exophages ;
- les pièges de lumières sont inefficaces car *Paysandisia archon* adulte a une activité diurne ;
- les leurres empoisonnés sont inopérants contre les papillons adultes car à ce stade, ceux-ci ne se nourrissent pas ;
- le contrôle par des phéromones synthétiques pourrait également être inopérant, dans la mesure où la femelle *P. archon* semble ne pas produire un large spectre de phéromones sexuelles.

MONTAGUD ALARIO, 2004, mentionne les inconvénients des traitements actuels contre *P. archon* (coût, efficacité limitée) et évoque l'intérêt potentiel d'utiliser un ennemi naturel de ce papillon. Toutefois, MONTAGUD ALARIO ne précise pas quel ennemi peut être utilisé.

Il a été rapporté en 2006 sur l'Internet que (i) pour lutter contre *P. archon,* la lutte biologique « *prendrait des années avant d'aboutir* » et (ii) l'émergence d'un traitement prometteur qui consiste à appliquer une pâte molle sur le palmier pour coller et piéger le papillon adulte (http://fr.groups.yahoo.com/group/Palmiers/message/8626).

Il a été rapporté en 2007 aussi sur l'Internet qu'aucun traitement biologique n'existe actuellement contre *P. archon* (http://palmae.free.fr/paysandisia_archon.htm). Ce document propose de tester un produit contenant *Bacillus thurigiensis.*

Actuellement, les moyens de lutte contre *Paysandisia archon* sont de deux types : mécanique et chimique :

- Moyens mécaniques : les arbres infestés ou susceptibles de l'être sont recouverts d'un voile d'hivernage ou d'un filet anti-grêle. En outre, ils doivent être systématiquement arrachés, broyés puis brûlés.
- Moyens chimiques : on peut citer l'utilisation de composés organophosphorés inhibiteurs de la cholinestérase, tels que le chlorpyrifos (Suxon vert®, Nufarm), l'acéphate, le diméthoate (Dimézyl 40 EC®, Agriphyt), et le phosalone (Zolone®, Fertiligène). Cependant ils sont peu efficaces lorsque les larves sont déjà enfouies à l'intérieur du palmier. De plus, les cocons de *Paysandisia archon* sont imperméables aux insecticides (Sarto I Monteys et Aguilar, précité). Pour surmonter ces difficultés, ces insecticides doivent être utilisés de manière répétée, selon une fréquence choisie en fonction de l'importance de l'infestation : par exemple, lorsque l'infestation est faible, deux traitements uniques peuvent suffir, l'un en juin et l'autre en août ; lorsque l'infestation est importante, le traitement peut être mensuel, de fin mai à fin septembre (Sarto I Monteys et Aguilar, précité).

Ces traitements chimiques peuvent être combinés avec l'utilisation d'un voile d'hivernage ou d'un filet anti-grêle de façon à ralentir l'évaporation du produit et éviter l'évasion des papillons issus des éventuelles larves survivantes.

En France, l'importance des dégâts occasionnés par *P. archon* et le risque que représente ce papillon pour les palmeraies sont tels que *Paysandisia archon* a fait l'objet d'un arrêté de lutte biologique obligatoire (Journal Officiel du 21 février 2002). Toutefois, les moyens de lutte (mécanique ou chimique) actuels contre *P. archon* présentent l'inconvénient majeur de ne pas produire de résultats satisfaisants. Il existe donc un réel besoin d'améliorer la lutte contre *Paysandisia archon,* et plus particulièrement un besoin d'améliorer les traitements existants et/ou de développer des stratégies de lutte alternatives ou complémentaires plus efficaces.

La Demande Internationale WO 02/28189 concerne l'utilisation de champignons entomopathogènes comme insecticides. Ce document divulgue des utilisations de champignons notamment contre des lépidoptères de la famille des pyralidés ou de la famille des noctuidés. Ce document préconise d'utiliser des champignons au stade de mycélium « préconidial » comme agents attractifs et/ou pathogènes. Ce document cite des exemples de champignons et rapporte notamment que *Beauvaria bassiana, Metarhizium anisopliae, Paecilomyces farinosus* et *Zoophthora radicans* ont un large spectre d'hôtes, *B. bassiana* pouvant infecter plus de 700 espèces d'arthropodes. Ce document cite également de nombreux exemples d'insectes pouvant être ciblés et notamment de nombreux lépidoptères. Par ailleurs, ce document mentionne qu'un champignon pathogène et virulent pour une espèce d'insecte pourrait être inefficace contre d'autres espèces, y-compris des espèces de la même famille ou du même genre. De surcroît, selon ce document, il arrive fréquemment qu'en plein

champ, des champignons à large spectre d'hôtes sont davantage spécifiques et s'attaquent à un seul hôte, même lorsqu'un hôte apparenté est également présent.Le Brevet US 5,516,513 se donne pour objectif d'identifier un agent biologique ayant une activité ovicide envers les lépidoptères. Ce document préconise l'utilisation d'un isolat de *B. bassiana* (ATCC 74040), déjà connu pour sa virulence notamment contre des lépidoptères de la famille des noctuidés ou des pyralidés. Ce document décrit également un procédé de protection d'une plante contre lesdits lépidoptères, comprenant l'application dudit isolat sur la partie foliaire de la plante.

GAFUROVA ET AL., 1980, rapportent que la pulvérisation en laboratoire d'endotoxines d'*Aspergillus ochraceus,* de *B. bassiana,* de *Gymnoascus reesi* et de *Paecilomyces* sur des insectes entraîne 40% à 53% de mortalité. L'identité de ces insectes n'est pas précisée. Les auteurs rapportent en outre que des toxines de *B. bassiana* ont un effet synergique sur une solution de boverine 1% utilisée contre des chenilles de carpocapse (lépidoptère de la superfamille des Tortricoidea).

FORNELLI ET AL., 2004, décrivent l'étude de la toxicité de seize métabolites de champignons sur la lignée cellulaire SF9 (lignée issue de cellules de *Spodoptera frugiperda* [superfamille des Noctuoidea]) à l'aide de deux tests colorimétriques *in vitro,* à savoir l'exclusion du Bleu Trypan et la coloration par le MTT.

VILCINSKAS ET AL., 1999, concerne l'étude de l'effet des métabolites peptidiques cycliques beauverolide L et cyclosporine A sur la réponse immunitaire cellulaire et humorale de larves de la gallérie *Galleria mellonella.*

La Demande EP 1297746 porte sur l'utilisation de *Paecilomyces tenuipes* T1 FERM BP-7861 pour la préparation d'insecticides dirigés notamment contre certains lépidoptères.

Le Brevet US 5,227,396 décrit l'utilisation de plusieurs composés indoliques provenant *d'Aspergillus sulphureus* et *d' Aspergillus flavus* pour lutter contre des lépidoptères tels que *Helicoverpa zea* (superfamille des Noctuoidea).

En conséquence, les inventeurs se sont donnés pour but de pourvoir à des moyens de lutte efficaces contre *Paysandisia archon* qui répondent mieux aux besoins de la pratique que les moyens utilisés jusqu'à présent.

Ils ont ainsi mis au point une méthode de lutte biologique contre *P. archon,* qui met en oeuvre le champignon entomopathogène *Beauveria bassiana.*

Les champignons entomopathogènes sont des microorganismes capables de provoquer des désordres pathologiques chez certains insectes. On dénombre plus de sept cents espèces de champignons pathogènes pour les insectes (Feng et *al.,* 1994). Ces agents sont particulièrement intéressants du fait de leur aptitude à infecter l'hôte par ingestion ou par simple contact, à tous les stades du développement des insectes (oeufs, larves, adultes).

La découverte d'isolats de champignons dans des cadavres d'insectes a permis de mettre en évidence leur pouvoir pathogène envers leurs hôtes d'origine.

A titre d'exemple, *Pannolis flammea* et *Castnia licus,* des lépidoptères éloignés de *Paysandisia archon,* sont respectivement des hôtes d'un isolat de *Beauveria bassiana* et d'un isolat de *Beauveria brongniiarti* (Hicks et *al.,* 2000 ; Humber et Hansen, 2005). *Castnia licus* est en outre décrit comme étant un hôte d'isolats de *Beauveria brongniartii* (Humber et Hansen, 2005) et d'isolats de *Metarhizium anisopliae* (Figueiredo *et al.,* 2002).

Il existe plus de deux cents hôtes du champignon entomopathogène *Beauveria bassiana,* principalement chez les lépidoptères, tels que *Castnia licus* et *Panolis flammea,* et chez les coléoptères. Cependant, les épizooties causées par *Beauveria bassiana* arrivent peu fréquemment (Feng *et al.,* 1994). D'une manière générale, les isolats de *Beauveria bassiana* sont davantage pathogènes envers leurs hôtes d'origine ou des espèces proches dans la classification (Feng et *al.,* précité ; Moore *et al.,* 1993).

L'utilisation de champignons entomopathogènes comme agent de contrôle des insectes nuisibles existe depuis longtemps (Bartlett et Jaronsky, 1988). Les genres les plus étudiés en tant que mycoinsecticides sont *Beauveria, Metarhizium, Verticillium, Hirsutella, Erynia* (ou *Zoophtora), Nomurae, Aspergillus, Aschersonia, Paecilomyces, Tolypocladium, Leptolegnia, Culicinomyces, Coelomomyces* et *Lagenidium* (Moore et Prior, 1993). Par exemple, l'isolat *Beauveria bassiana* GHA (Bb GHA, ou Bb GHA 1991 déposé auprès de l'ATCC (American Type Culture Collection) sous le numéro 74250), dont l'hôte d'origine est la chrysomèle maculée du concombre (*Diabrotica undecimpunctata), est commercialisé comme mycoinsecticide (Botaniguard®)* ; l'isolat *Beauveria bassiana* 147 (Bb 147)(également parfois dénommé 111B004 et déposé auprès de la C.N.C.M. sous le n° I-2960), est commercialisé notamment comme moyen de lutte contre son hôte d'origine, la pyrale du maïs, *Ostrinia nubilalis* (Ostrinil®, Natural Plant Protection (FR)).

Il est généralement admis qu'un champignon pathogène et virulent vis-à-vis d'un insecte d'une espèce donnée peut être inefficace contre d'autres espèces, y-compris des espèces de la même famille ou du même genre (WO 02/28189).

De façon surprenante, les inventeurs ont maintenant montré qu'il est possible d'utiliser le champignon entomopathogène *Beauveria bassiana* pour lutter contre *Paysandisia archon.* En effet, lesdits champignons peuvent se substituer aux moyens de lutte actuels, aussi bien à titre préventif qu'à titre curatif. De surcroît, lesdits champignons peuvent être associés à des moyens mécaniques ou chimiques, de façon à améliorer leur efficacité. En outre, lesdits champignons constituent un moyen de lutte biologique parfaitement adapté à la lutte contre le papillon notamment en milieu urbain.

Un tel résultat est inattendu parce qu'aucun champignon n'était jusqu'à présent considéré comme pathogène envers *Paysandisia archon.* En effet, aucun champignon n'a été retrouvé dans des cadavres de *P. archon.* En outre, en ce qui concerne *Beauveria bassiana,* ce résultat est également inattendu parce que ce papillon est originaire d'Amérique du sud, alors que les hôtes connus de *Beauveria bassiana* sont peu présents sur le continent américain (Aquino de Muro et *al.,* 2003).

La présente invention a donc pour objet l'utilisation d'un champignon entomopathogène de l'espèce *Beauveria bassina* comme moyen de lutte biologique contre *Paysandisia archon.*

La présente invention a également pour objet l'utilisation d'un champignon entomopathogène de l'espèce *Beauveria bassiana,* pour le traitement d'un végétal contre une infestation par *Paysandisia archon.*

De manière préférée, ledit champignon entomopathogène est sélectionné dans le groupe constitué par :

- la souche de *Beauveria bassiana,* dénommée Bb INRA pyr, déposée auprès de la Collection Nationale de Cultures de Microorganismes (C.N.C.M.) sous le numéro 1-867 le 7 juin 1989 (Brevet FR 2648677, déposé sous le n°8908553) ;

- la souche de *Beauveria bassiana,* dénommée 111B004, déposée auprès de la C.N.C.M. sous le n° I-2960 le 3 décembre 2002 ; et

- la souche de *Beauveria bassiana,* dénommée Bb GHA, déposée auprès de l'ATCC (American Type Culture Collection) sous le numéro 74250 le 11 octobre 1993 (Brevet US 5,939,065).

Selon un autre mode de mise en oeuvre avantageux desdites utilisations, ledit champignon entomopathogène est utilisé sous forme de spores ou sous forme de mycélium. Lorsqu'il est utilisé sous forme de spore, il s'agit par exemple de conidies (ou conidiospores) ou bien de blastospores. De préférence, ledit champignon est utilisé sous forme de conidies.

La préparation des spores de champignons entomopathogènes fait appel à des techniques connues de l'homme du métier.

Lorsqu'il est sous forme de spores, le champignon peut par exemple être formulé soit sous la forme d'un produit solide, soit sous la forme d'un produit liquide.

Produit solide : il est notamment possible d'utiliser directement les spores pures. Il est cependant préférable d'associer les spores lyophilisées à un émulgateur adapté, de manière à réaliser une poudre mouillable (« wettable powder »). Par exemple, le Brevet Français, au nom de l'INRA, FR 2648677, décrit la formulation de spores pures sur leurs substrats de fermentation à base de granulés d'argile. A titre d'illustration de la formulation sous forme de poudre mouillable, on peut citer le composé BotanigardWP® préparé à partir d'une poudre mouillable comprenant des spores de la souche Bb GHA de *Beauveria bassiana.*

Produit liquide : on peut notamment citer des suspensions de spores préparées à partir de poudres mouillables, telles que les suspensions de conidies enrobées dans l'argile ou les suspensions de conidies enrobées dans des granules d'alginate décrites dans le brevet Français FR 2648677 précité. On peut également citer les mélanges de spores avec une huile minérale ou végétale. Avantageusement, ce type de mélange comprend en outre un émulgateur adapté, de façon à rendre le produit miscible dans l'eau. Ce type de préparation, comprenant une suspension de spores dans une émulsion, est notamment décrit dans le Brevet US 5,939,065 (Clifford et al.), qui applique cette technique à l'isolat *B. bassiana* Bb GHA, en vue d'une application comme mycoinsecticide notamment contre des abeilles, des coléoptères, des punaises ou des sauterelles.

De préférence, la composition du champignon entomopathogène utilisable dans la présente invention est une composition ayant déjà fait ses preuves par ailleurs comme agent mycoinsecticide contre d'autres insectes que *P. archon.* Par exemple, il est possible d'utiliser le composé Batanigard® comprenant des spores de la souche Bb GHA de *Beauveria bassiana.* Il est également possible d'utiliser le composé Ostrinil® comprenant des spores de la souche Bb 147 de *Beauveria bassiana.* Ladite composition peut être utilisée telle quelle ou bien diluée par exemple dans l'eau ou dans une émulsion H/E (huile/émulgateur).

Lorsqu'il est sous forme de mycélium, le champignon peut par exemple être formulé sous la forme d'un produit liquide tel qu'une suspension de mycélium du type de la suspension décrite dans le Brevet FR 2648677 précité.

D'autres techniques peuvent être mises en oeuvre par l'homme du métier pour préparer les spores de champignons entomopathogènes. Par exemple, l'article de synthèse de Feng *et al.* expose des techniques de fermentation adaptées à la production massive de spores de *Beauveria bassiana,* ainsi que des procédés d'obtention d'une poudre de spores pures de *Beauveria bassiana.* Cet article fournit également plusieurs méthodes de formulation du champignon *Beauveria bassiana,* sous forme de spores (conidies ou blastospores) ou sous la forme d'un mycélium. D'autres documents décrivent d'autres procédés de préparation de mycoinsecticides (par exemple, la Demande Internationale WO 96/21358) utilisables dans la présente invention.

Selon un autre mode de mise en oeuvre avantageux desdites utilisations, ledit champignon entomopathogène est utilisé en combinaison avec un ou plusieurs autres champignons entomopathogènes.

Selon une disposition avantageuse de ce mode de mise en oeuvre, ledit autre champignon entomopathogène appartient à une famille différente de celle dudit champignon entomopatogène.

Selon une autre disposition avantageuse de ce mode de mise en oeuvre, ledit autre champignon entomopathogène appartient à un genre différent de celui dudit champignon entomopathogène.

Selon encore une autre disposition avantageuse de ce mode de mise en oeuvre, ledit autre champignon entomopathogène appartient à une espèce différente de celle dudit champignon entomopathogène.

Selon une autre disposition de ce mode de mise en oeuvre, ledit autre champignon entomopathogène appartient à la même espèce que celle dudit champignon entomopathogène ; avantageusement, il s'agit de l'utilisation combinée des souches Bb 147 et Bb GHA de *Beauveria bassiana.*

On entend par utilisation combinée ou utilisation en combinaison, soit l'utilisation des champignons sous la forme d'un mélange de plusieurs champignons, soit l'utilisation de plusieurs compositions distinctes, chacune comprenant un seul champignon. Il peut également s'agir d'une utilisation associant un ou plusieurs mélange(s) de plusieurs champignons, avec une ou plusieurs composition(s) comprenant chacune un seul champignon.

Dans le cas de l'utilisation desdits champignons entomopathogènes pour traiter un végétal :

- ledit végétal est de préférence sélectionné dans le groupe constitué par (i) les céréales, telles que le maïs, (ii) les palmiers, et (iii) les plantes ornementales telles que les yuccas ou les cannes provençales. De préférence, il s'agit d'un palmier, tel qu'un palmier agricole (par exemple palmier à huile, dattier, cocotier) ou encore un palmier ornemental. Ledit palmier est par exemple sélectionné dans le groupe constitué par les palmiers de genres *Trithrinax, Butia, Latania, Chamaerops, Phoenix, Livistona, Sabal, Trachycarpus* et *Washingtonia ;* il s'agit par exemple d'un palmier sélectionné parmi *Chamaerops humilis* et *Trachycarpus fortunei.*
- ledit traitement est un traitement curatif. Le terme curatif est employé ici pour qualifier le traitement d'un végétal, tel qu'un palmier, déjà infesté par *Paysandisia archon.* C'est par exemple le cas lorsque ledit palmier contient des oeufs, des larves, et/ou des chrysalides de *P. archon.* C'est également le cas lorsque *P. archon* est au stade adulte, par exemple lorsqu'il s'apprête à pondre sur les feuilles du palmier ou bien lorsqu'il sort du cocon avant de s'échapper du palmier.

Ledit traitement curatif peut être mis en oeuvre quel que soit le stade de développement de *Paysan-disia archon* (oeuf, larve, chrysalide, adulte) ; de manière avantageuse, ledit traitement curatif est mis en oeuvre lorsque *P. archon* est au stade d'oeuf ; de manière préférée, il est mis en oeuvre lorsque *P. archon* est au stade de larve. Préférentiellement encore, il est mis en oeuvre lorsque *P. archon* est au stade de chrysalide ; de manière encore préférée, ledit traitement curatif est mis en oeuvre lorsque *P. archon* est au stade adulte.

- ledit traitement est un traitement préventif. Le terme préventif est employé ici pour désigner le traitement d'un végétal, tel qu'un palmier, non encore infesté par *P. archon.* Il désigne également le traitement d'un végétal qui a déjà été infesté au moins une fois mais qui ne contient plus d'oeufs, de larves, de chrysalides ou d'adultes de *P. archon.*

La présente invention a également pour objet un procédé de traitement d'un végétal contre une infestation par *Paysandisia archon* comprenant une étape consistant à mettre en contact ledit végétal avec le champignon entomopathogène *Beauveria bassiana.*

La mise en contact du végétal avec le champignon entomopathogène peut être mise en oeuvre par tout type de procédé connu en soi par l'homme du métier. A titre d'exemple, la mise en contact peut comprendre l'application sur une, plusieurs ou toutes partie(s) aérienne(s) dudit végétal (par exemple, le stipe et/ou les palmes d'un palmier), d'une composition comprenant le champignon entomopathogène. Ladite application peut être réalisée par arrosage (pulvérisation ou aspersion). Par exemple, elle peut être réalisée à l'aide d'un pulvérisateur, tel qu'un pulvérisateur à dos, un pulvérisateur tracté ou tout autre type de pulvérisateur. L'arrosage peut avoir lieu depuis le sol (par exemple à l'aide de tourniquet, de rampe ou de canon), ou bien depuis un point élevé, tel qu'une nacelle ou un véhicule aérien. Une telle application est notamment adaptée à un traitement préventif. Elle convient aussi à un traitement curatif.

La mise en contact du végétal avec le champignon entomopathogène peut aussi comprendre l'application de la solution à l'intérieur dudit végétal. Par exemple, dans le cas d'un palmier, une telle application peut être réalisée par injection sous pression de la solution dans le stipe (tronc) au moyen d'un injecteur adapté. Elle peut être également effectuée par perfusion dans le stipe (tronc) de la solution qui pénètre par gravité entre les fibres du stipe et s'y répartit par capillarité. La solution peut aussi être directement versée dans les galeries creusées par les larves de *Paysandisia archon.* Une telle application convient particulièrement à un traitement curatif. Elle peut toutefois également être mise en oeuvre dans le cadre d'un traitement préventif.

Selon un mode de mise en oeuvre avantageux dudit procédé, ledit traitement est un traitement curatif, tel que défini plus haut ; de préférence, ledit traitement est effectué lorsque *P. archon* est au stade d'oeuf ; de manière encore préférée, il est effectué lorsque *P. archon* est au stade de larve ; préférentiellement encore, il est effectué lorsque *P. archon* est au stade de chrysalide ; de manière encore plus préférée, ledit traitement curatif est mis en oeuvre lorsque *P. archon* est au stade adulte.

Selon un autre mode de mise en oeuvre avantageux dudit procédé, ledit traitement est un traitement préventif, tel que défini plus haut.

Selon un autre mode de mise en oeuvre avantageux dudit procédé, ledit champignon entomopathogène est tel que défini ci-dessus.

Selon encore un autre mode de mise en oeuvre avantageux dudit procédé, ledit champignon entomopathogène est sous forme de spores, telles que des conidies (ou conidiospores) ou des blastospores, ou sous forme de mycélium. De manière avantageuse, ledit champignon est sous forme de conidies.

Selon un autre mode de mise en oeuvre avantageux dudit procédé, ledit champignon entomopathogène est utilisé en combinaison avec un ou plusieurs autre(s) champignon(s) entomopathogène(s).

Selon une disposition avantageuse de ce mode de mise en oeuvre, ledit autre champignon entomopathogène appartient à une famille différente de celle dudit champignon entomopatogène.

Selon une autre disposition avantageuse de ce mode de mise en oeuvre, ledit autre champignon entomopathogène appartient à un genre différent de celui dudit champignon entomopathogène.

Selon encore une autre disposition avantageuse de ce mode de mise en oeuvre, ledit autre champignon entomopathogène appartient à une espèce différente de celle dudit champignon entomopathogène.

Selon une autre disposition de ce mode de mise en oeuvre, ledit autre champignon entomopathogène appartient à la même espèce que celle dudit champignon entomopathogène ; avantageusement, il s'agit de l'utilisation combinée des souches Bb 147 et Bb GHA de *Beauveria bassiana.*

Selon une disposition préférée de ce mode de mise en oeuvre, ledit végétal est sélectionné dans le groupe constitué par (i) les céréales, telles que le maïs, (ii) les palmiers, et (iii) les plantes ornementales telles que les yuccas et les cannes provençales.

De préférence, ledit végétal est un palmier, tel qu'un palmier agricole (par exemple palmier à huile, dattier, cocotier) ou encore un palmier ornemental. Ledit palmier est par exemple sélectionné dans le groupe constitué par les palmiers de genres *Trithrinax, Butia, Latania, Chamaerops, Phoenix, Livistona, Sabal, Trachycarpus* et *Washingtonia ;* il s'agit par exemple d'un palmier sélectionné parmi *Chamaerops humilis* et *Trachycarpus fortunei.*

Outre les dispositions qui précèdent, l'invention comprend encore d'autres dispositions, qui ressortiront de la description qui va suivre, qui se réfère à des exemples de mise en oeuvre de l'objet de la présente invention. Il doit être bien entendu, toutefois, que ces exemples sont donnés uniquement à titre d'illustration de l'objet de l'invention, dont ils ne constituent en aucune manière une limitation.

## EXEMPLE I : Matériels et méthodes

### 1) Origine des insectes et des champignons

Les oeufs de *Paysandisia archon* proviennent de la société VEGETECH (FR).

Les oeufs *d'Ostrinia nubilalis* sont fournis par l'Institut National de la Recherche Agronomique (INRA) de Surgères (France).

Les larves de *Cydia pomonella* et de *Plutella xylostella* proviennent de la société Natural Plant Protection (France).

La souche de *Beauveria bassiana* Bb 147 est la souche utilisée pour le produit Ostrinil® (Arysta Lifescience). Cette souche a été déposée auprès de la Collection Nationale de Culture de Microorganisme (C.N.C.M.) le 3 décembre 2002 sous le numéro I-2960, comme précisé ci-dessus.

La souche de *Beauveria bassiana* Bb GHA, également dénommée Bb GHA 1991, est la souche utilisée dans le produit Botanigard® (Mycotech). Elle a fait l'objet d'un dépôt auprès de l'A.T.C.C. (American Type Culture Collection) sous le numéro 74250, comme précisé ci-dessus.

### 2) Méthodes d'élevage

*Paysandisia archon*

Des oeufs de *Paysandisia archon* de trois lots différents, numérotés lots 1 à 3, sont disposés dans des boîtes rectangulaires au creux d'une petite logette sur du sable fin humidifié.

Les oeufs des lots 1 et 2 sont incubés à 25°C sous photopériode 16:8 (c'est-à-dire suivant plusieurs cycles de 24 heures constitués de 16 heures à la lumière suivies de 8h à l'obscurité) et sous humidité élevée due au sable mouillé, jusqu'à éclosion. Les larves sont alors élevées sur rachis de palmier à 25°C sous photopériode 16:8 en attendant l'inoculation.

Les oeufs du lot 3 sont inoculés, comme indiqué ci-après, dès réception sans leur laisser le temps d'éclore.

*Ostrinia nubilalis*

Les oeufs *d'Ostrinia nubilalis* sont incubés à 25°C sous photopériode 16:8 et sous humidité ambiante jusqu'à éclosion.

Des larves *d'Ostrinia nubilalis* sont installées sur leur milieu nutritif semi-synthétique avant inoculation (Darazy-Choubaya (2002)).

*Cydia pomonella*

Les larves de *Cydia pomonella* sont élevées sur un milieu nutritif semi-synthétique (Sender, 1970) à 25°C sous photopériode 16:8 jusqu'à l'inoculation.

*Plutella xylostella*

Les larves de *Plutella xylostella* sont élevées sur feuilles de chou, leur plante hôte, à 25°C sous photopériode 16:8, jusqu'à l'inoculation.

**3) Production des spores des souches Bb 147 et Bb GHA de Beauveria *bassiana***

Les souches Bb 147 et Bb GHA de *Beauveria bassiana* sont mises en culture en solution nutritive liquide (saccharose 115 g/l, protéinal 70 g/l), pendant 4 jours sous agitation. Les suspensions ainsi obtenues, le cas échéant ajustées à $1.10^4$ spores/ml, sont alors étalées sur une boîte de PDA (Potatoe Dextrose Agar, Biokar Diagnostics) rectangulaire de taille 243 mm x 243 mm. Les boîtes sont incubées 7 à 10 jours à 25°C. Les spores sont alors récoltées en grattant la surface de la gélose avec un racloir puis séchées en sac Osmofilm (Fischer Bioblock A16994) pendant une dizaine de jours à 25°C avant de passer le sac sous cloche à vide pour permettre une déshydratation encore plus poussée. Les spores sont triées sur tamis 100 $\mu$m (Fischer Bioblock A82308) afin d'éliminer les débris de gélose puis conservées à 4°C, ensachées en sac aluminium fermé hermétiquement, en attendant leur formulation.

Un contrôle de l'humidité et des propriétés germinatives des spores est alors effectué. Il a permis de déterminer que le pourcentage d'humidité relative est inférieur à 5%, et que le pourcentage de germination, calculé en se basant sur la numération des spores, est supérieur à 95%.

**4) Formulation des spores**

Les compositions « Bb 147 » et « Bb GHA » sont formulées comme indiqué dans le Tableau I.

**Tableau I :** Composition des formulations réalisées pour les essais

| Ingrédient (% w/w) | Blanc de formulation | « Bb 147 » | « Bb GHA » |
|---|---|---|---|
| Spores pures (type) | 0% | 16% | 16% |
| Huile minérale | 85% | 71% | 71% |
| Emulgateur | 15% | 13% | 13% |

Le blanc de formulation représente le témoin négatif dans les exemples suivants.

Une fois diluées, ces compositions seront, sauf précision contraire, utilisées pour inoculer les oeufs et les larves de *Paysandisia archon* et les larves *d'Ostrinia nubilalis,* de *Cydia pomonella* et de *Plutella xylostella.*

Par la suite et sauf précision contraire, les compositions « Blanc de formulation », « Bb 147 » et « Bb GHA » sont des dilutions au centième (1/100) des formulations obtenues selon le Tableau I.

Parmi les émulgateurs utilisables, on peut citer la lécithine de soja ou encore un mélange en dispersion colloïdale d'alcool cétostéarylique et d'émulgateurs non-ioniques à base d'éthers poly-glycoliques d'alcools gras saturés (Emulgade® 1000NI, Henkel).

**5) Réalisation des inoculations**

A- Inoculation des oeufs de *Paysandisia archon*

A réception, les oeufs de *P. archon* du lot 3 sont installés dans des boîtes rectangulaires compartimentées sur du sable et sont inoculés selon trois approches différentes de la façon suivante :

14 oeufs sont inoculés avec la composition « blanc de formulation », 45 oeufs avec la composition « Bb 147 » et 45 oeufs avec la composition « Bb GHA ». L'inoculation est réalisée par le dépôt sur chaque oeuf de 4 $\mu$l de la composition testée.

L'incubation est réalisée à 25°C et sous humidité élevée, sous photopériode 16:8.

Après l'éclosion, les larves sont élevées sur rachis de palmier pour permettre le calcul de la survie larvaire.

B- Inoculation des larves de *Paysandisia archon, d'Ostrinia nubilalis,* de *Cydia pomonella* et de *Plutella xylostella*

Les larves de *P. archon, O. nubilalis* et de C. *pomonella* sont inoculées le même jour.

a) Essai préalable

Une manipulation préparatoire a été menée afin d'évaluer si les adjuvants de la formulation peuvent être à eux seuls pathogènes pour les larves de *P. archon.* Elle avait aussi pour optique de permettre la détermination de la dilution des formulations à tester adéquate afin d'éviter tout biais expérimental suite à une surmortalité des larves due au choc toxique causé par ces adjuvants. Pour cela, cinq larves de *P. archon* ont été inoculées, comme indiqué plus haut, avec le blanc de formulation dilué au 1/100 et au 1/1000.

Il est apparu qu'après 6 jours d'incubation à 25°C à l'obscurité, la survie larvaire était de 100% pour la dilution au 1/100 et de 60% pour la dilution au 1/1000. Ce résultat montre que les adjuvants du blanc de formulation dilué au 1/100 ne sont pas létaux pour les larves de *P. archon.* Par la suite, il a donc été décidé de travailler avec une dilution au 1/100 des préparations obtenues selon le Tableau I.

b) Inoculation des larves de P. *archon*

Les larves issues des oeufs des lots 1 et 2, âgées de trois jours au moment de l'inoculation, sont séparées du morceau de palmier sur lequel elles avaient été déposées lors de l'éclosion de l'oeuf (voir Exemple I.2), puis sont trempées avec une pince dans la solution testée pendant quelques secondes.

30 larves sont ainsi inoculées avec la solution Bb 147, et 30 autres avec la solution Bb GHA. Pour le témoin négatif, 30 larves sont inoculées avec la solution « blanc de formulation ». Pour le témoin positif, 5 larves sont inoculées avec la poudre de spores pures Bb 147.

Chaque larve est ensuite déposée dans une boîte de Pétri de diamètre 4,5 cm, dont le fond est recouvert d'un papier filtre (Sartorius, Fischer Bioblock A16179) préalablement humidifié, et dans laquelle un petit morceau de rachis de palmier est placé.

Les boîtes sont disposées dans une barquette contenant deux serviettes en tissu humidifiées recouvertes d'une grille. Ces barquettes sont fermées hermétiquement et incubées à l'obscurité à 25°C.

c) Inoculation des larves d'*Ostrinia nubilalis*

La Pyrale du maïs étant l'hôte d'origine de la souche Bb 147 de *Beauveria bassiana,* cet insecte est utilisé comme témoin positif de l'apparition des mycoses. La souche Bb GHA n'a pas été inoculée à cet insecte.

Les larves, d'âge variable, sont séparées du milieu nutritif sur lequel elles avaient été installées lors de l'éclosion de l'oeuf (voir Exemple 1.2), puis sont trempées avec une pince dans la solution testée pendant quelques secondes.

15 larves sont ainsi inoculées avec la solution Bb 147 et 10 autres avec la solution « blanc de formulation » utilisée comme témoins négatif.

Les dispositifs d'élevage des larves *d'Ostrinia nubilalis* sont identiques à ceux utilisés pour les larves de *Paysandisia archon.* Le morceau de rachis est remplacé par un morceau de milieu semi-synthétique (voir Exemple I.2).

d) Inoculation des larves de *Cydia pomonella*

Les larves (stade larvaire II) sont inoculées à raison de 30 larves par modalité (composition Bb 147 1/100 ou blanc de formulation 1/100). Le jour de l'inoculation, les larves sont extraites de leur milieu nutritif et sont trempées dans la solution à tester. Elles sont par la suite disposées dans des petites boîtes de Pétri en présence d'un morceau de milieu nutritif. Les boîtes sont incubées à 25°C sous photopériode 16:8. La mortalité des larves est contrôlée tous les 2 jours ou 3 jours pendant 14 jours. Les pourcentages de mortalité brute et corrigée sont calculés tel qu'indiqué dans l'Exemple I.6.

e) Inoculation des larves de *Plutella xylostella*

Le jour de l'inoculation, les larves (stade larvaire III) sont prélevées et sont imbibées à l'aide d'un pinceau de la solution à tester. Elles sont ensuite disposées dans de petites boîtes de Pétri en présence d'un morceau de feuille de chou. Les boîtes sont incubées à 25°C sous photopériode 16:8. La mortalité des larves est contrôlée 1 jour, 3 jours, 7 jours et 13 jours après l'inoculation.

**6) Lecture et exploitation des résultats bruts**

La lecture des résultats pour *P. archon* et *O. nubilalis* est réalisée à environ J+3, J+5, J+7, J+10, J+12, J+14, J+17, J+20, J+24 et J+27, c'est-à-dire respectivement environ 3, 5, 7, 10, 12, 14, 17, 20, 24 et 27 jours après l'inoculation de la façon suivante : pour chaque insecte, la boîte est ouverte sous une hotte à flux laminaire, et la larve est recherchée dans le morceau de rachis ou de milieu nutritif. Si nécessaire, de la nourriture est ajoutée. Les boîtes où les larves sont mortes ou mycosées sont identifiées.

Le pourcentage de mortalité brute est déterminé selon la formule suivante :

% mortalité brute = (nombre d'individus morts)/(nombre d'individus pris en compte pour le test)

La mortalité naturelle correspond à la mortalité brute dans les essais témoins (blanc de formulation 1/100)

Afin de tenir compte de la mortalité naturelle, la mortalité brute est corrigée selon la formule d'Abbott :

% mortalité corrigée = [(%mortalité brute)-(%mortalité naturelle)]/[1-(%mortalité naturelle)]

Par exemple, si le pourcentage de mortalité brute est de 35% et le pourcentage de mortalité naturelle de 10%, alors le pourcentage de mortalité corrigée est de : (0,35-0,10)/(1-0,10) = 28%.

**EXEMPLE II : Evaluation de la pathogénicité des souches Bb 147 et Bb GHA de Beauveria *bassiana* envers les oeufs de *Paysandisia archon***

Pour évaluer la pathogénicité des spores de Beauveria *bassiana* envers les oeufs de *Paysandisia archon,* l'expérience suivante est réalisée : des oeufs de *P. archon* sont inoculés, avec soit le blanc de formulation, soit la composition Bb 147, soit la composition Bb GHA, comme indiqué dans l'Exemple I.5.A. Après l'inoculation, les oeufs sont incubés dans des conditions permettant l'éclosion et la survie des larves (Exemple I.5.A).

La pathogénicité des spores de Bb 147 et Bb GHA est alors déterminée par le calcul de la survie larvaire, c'est-à-dire le pourcentage de larves survivantes par rapport au nombre total d'oeufs testés. Les résultats obtenus avec la souche Bb GHA sont présentés dans le Tableau II.

**Tableau II :** Détermination de la survie larvaire après inoculation des oeufs de *P. archon* avec la composition Bb GHA.

| Test | oeufs testés | | | | | Larves | | Survie larvaire |
|---|---|---|---|---|---|---|---|---|
| | total | mycosés | non mycosés | | | mortes | survivantes | |
| | | | total | non éclos | éclos | | | |
| **Blanc de formulation** | 14 | 0 | 14 | 4 | 10 | 1 | 9 | 64% |
| **Bb GHA** | 45 | 31 | 14 | 10 | 4 | 2 (mortes et mycosées) | 2 | 4% |

Lorsque les oeufs sont inoculés avec le témoin (blanc de formulation 1/100), le pourcentage d'oeufs éclos est de l'ordre de 71% (10 oeufs éclos sur 14 testés). La survie larvaire est de l'ordre de 64% (9 larves survivantes sur 14 oeufs testés).

La mortalité augmente lorsqu'on utilise la composition Bb GHA. En effet, 69% des oeufs sont mycosés et seulement 9% des oeufs éclosent. La survie larvaire est de l'ordre de 4%.

Des résultats similaires sont obtenus avec la composition Bb 147 (non représenté), à savoir une diminution du nombre d'oeufs éclos et du pourcentage de survie larvaire par rapport au témoin.

Ces résultats montrent que les spores de la souche de *Beauveria bassiana* Bb 147 d'une part, et ceux de la souche de *Beauveria bassiana* Bb GHA d'autre part, sont pathogènes envers les oeufs de *Paysandisia* archon.

**EXEMPLE III : Pathogénicité des souches Bb 147 et Bb GHA** de *Beauveria bassiana* **sur les larves de *Paysandisia archon***

Pour confirmer les résultats obtenus avec les oeufs de *P. archon,* les souches Bb GHA et Bb 147 ont également été testées sur les larves de *P. archon.*

Dans un premier temps, les inventeurs ont cherché à valider le choix de la souche Bb 147 pour cette étude. Pour cela, ils ont recherché si la souche Bb 147 utilisée est bien pathogène envers son hôte d'origine, la pyrale du maïs (*Ostrinia nubilalis*). Cette expérience permet en outre de constituer un témoin positif de pathogénicité de la souche Bb 147.

Dans un deuxième temps, ils ont testé la pathogénicité des souches Bb GHA et Bb 147 directement sur les larves de *P. archon* et, à titre de comparaison, la pathogénicité de la souche Bb147 sur les larves de *Cydia pomonella* et de *Plutella xylostella.*

Enfin, les inventeurs ont étudié la relation dose-effet entre la souche Bb 147 et la mortalité des larves de *Paysandisia archon.*

**1) Pathogénicité de la souche Bb 147 de *Beauveria bassiana* envers les larves *d'Ostrinia nubilalis***

Dans cette étude, les larves *d'Ostrinia nubilalis* sont inoculées comme indiqué dans l'Exemple I.5.B avec soit le blanc de formulation 1/100, soit la composition Bb 147 1/100.

Les pourcentages de mortalité brute et corrigée, déterminés comme indiqués dans l'Exemple I.6, sont présentés dans le Tableau III ci-dessous.

**Tableau III** : Détermination des pourcentages de mortalité brute et corrigée des larves *d'Ostrinia nubilalis* inoculées avec la composition Bb 147 1/100

| Modalité | Nb de jours après inoculation | % mortalité brute | % mortalité corrigée |
|---|---|---|---|
| (*Ostrinia* nubilalis - Blanc de formulation 1/100) | 3 | 0,0% | |
| | 5 | 10,0% | |
| | 7 | 10,0% | |
| | 10 | 10,0% | |
| | 12 | 20,0% | |
| | 14 | 20,0% | |
| | 17 | 20,0 % | |
| | 20 | 20,0% | |
| | 24 | 20,0% | |
| | 27 | 20,0% | |
| (*Ostrinia nubilalis* - souche Bb147 1/100) | 3 | 6,7% | 6,7 |
| | 5 | 20,0% | 11,1% |
| | 7 | 46,7% | 40,7% |
| | 10 | 46,7% | 40,7% |
| | 12 | 46,7% | 33,3% |
| | 14 | 46,7% | 33,3% |
| | 17 | 46,7% | 33,3% |
| | 20 | 46,7% | 33,3% |
| | 24 | 46,7% | 33,3% |
| | 27 | 46,7% | 33,3% |

Le pourcentage de mortalité corrigée calculé après inoculation par la souche Bb 147 atteint au maximum 40,7% à J+7 et J+10.

Ces résultats confirment que la composition Bb 147 est pathogène envers les larves *d'Ostrinia nubilalis.*

**2) Pathogénicité des souches Bb 147 et Bb GHA de *Beauveria bassiana* envers les larves de *Paysandisia archon* et de la souche Bb 147 de *Beauveria bassiana* envers les larves de *Cydia pomonella* et de *Plutella xylostella***

Pour tester si les souches Bb 147 et Bb GHA ont également un effet pathogène envers les larves de *Paysandisia archon*, l'expérience suivante a été réalisée :

Les larves de *Paysandisia archon* sont inoculées, comme indiqué dans l'Exemple I.5.B, avec le blanc de formulation 1/100 (modalité 1), la composition Bb 147 1/100 (modalité 2) la composition Bb GHA 1/100 (modalité 3) ou la poudre de spores pures Bb 147 (témoin positif).

Les pourcentages de mortalité brute et corrigée ont ensuite été calculés comme indiqué dans l'Exemple I.6. Le Tableau IV illustre les résultats obtenus pour la souche Bb GHA.

**Tableau IV :** Détermination du pourcentage de mortalité brute et corrigée des larves de *Paysandisia archon* inoculées avec la composition Bb GHA 1/100

| *Modalité* | Nb de jours après inoculation | % mortalité brute | % mortalité corrigée |
|---|---|---|---|
| **1** <br><br>(***Paysandisia* archon - blanc de formulation 1/100)** | 3 | 6,7% | |
| | 5 | 6,7% | |
| | 7 | 6,7% | |
| | 10 | 10,0% | |
| | 12 | 14,3% | |
| | 14 | 17, 9% | |
| | 17 | 17,9% | |
| | 20 | 22,2% | |
| | 24 | 23,1% | |
| | 27 | 30,8% | |
| **3** <br><br>(***Paysandisia archon* - souche BbGHA 1/100)** | 3 | 10,0% | 3,6% |
| | 5 | 36,7% | 32,1% |
| | 7 | 60,0% | 57,1% |
| | 10 | 80,0% | 77,8% |
| | 12 | 80,0% | 76,7% |
| | 14 | 83,3% | 79,7% |
| | 17 | 93,3% | 91,9% |
| | 20 | 93,3% | 91,4% |
| | 24 | 93,3% | 91,3% |
| | 27 | 93,3% | 90,4% |

Le pourcentage de mortalité corrigée, calculé après inoculation par la souche Bb GHA est de 3,6% dès le troisième jour ; il dépasse 50% à J+7 et dépasse 90% à J+17.

Des résultats similaires sont obtenus avec la composition Bb 147 1/100 (modalité 2) (non représenté). Le témoin positif réalisé à partir de la poudre de spores pures Bb 147 confirme l'effet pathogène de la souche Bb 147 envers *P. archon.*

Ces résultats montrent que les compositions Bb 147 et Bb GHA sont pathogènes envers les larves de *Paysandisia archon.*

Les inventeurs ont en outre constaté que, de manière étonnante, bien que l'hôte d'origine de la souche Bb 147 soit *Ostrinia nubilalis,* celle-ci est néanmoins davantage pathogène envers *Paysandisia archon* qu'envers *Ostrinia nubilalis* (résultats non représentés).

Ces résultats, ainsi que ceux de l'Exemple précédent, démontrent plus généralement la pathogénicité du champignon *Beauveria bassiana* envers *Paysandisia archon.*

**3) Pathogénicité de la souche Bb 147 de *Beauveria bassiana* envers les larves de *Cydia pomonella* et de *Plutella xylostella***

La pathogénicité de la souche Bb 147 a également été testée envers les larves de *Cydia pomolella,* le carpocapse des pommes, et de *Plutella xylostella,* la teigne des Crucifères.

Pour cela, des larves de *Cydia pomonella,* au stade larvaire II, et des larves de *Plutella xylostella,* au stade larvaire III, ont été inoculées comme indiqué dans les Exemples I.5.B.d) et I.5.B.e) avec les formulations « Bb 147 » et « blanc de formulation » (témoin) (dilutions au 1/100 des formulations obtenues selon le Tableau I) lesquelles sont préparées comme indiqué dans l'Exemple I.4.

Les pourcentages de mortalité brute et corrigée sont calculés comme indiqué dans l'Exemple I.6.

Les résultats sont indiqués dans les Tableaux V et VI ci-après.

**Tableau V :** Détermination du pourcentage de mortalité brute et corrigée des larves de *Cydia pomonella* inoculées avec la composition Bb 147 1/100

| Modalité | Nb de jours après l'inoculation | % mortalité brute | % mortalité corrigée |
|---|---|---|---|
| 1 (Blanc de formulation 1/100) | 3 | 16.7% | |
| | 5 | 23.3% | |
| | 7 | 26.7% | |
| | 10 | 26.7% | |
| | 12 | 36.7% | |
| | 14 | 60.0% | |
| 2 (souche Bb 147 1/100) | 3 | 26.7% | 12.0% |
| | 5 | 33.3% | 13.0% |
| | 7 | 46.7% | 27.3% |
| | 10 | 46.7% | 27.3% |
| | 12 | 46.7% | 15.8% |
| | 14 | 53.3% | 0.0% |

Les mortalités obtenues avec le blanc de formulation dilué au 1/100 sont d'environ 25 % pendant toute la durée du test puis augmentent à partir du 12ème jour pour atteindre un pourcentage très important (60 %) 14 jours après inoculation. Les valeurs de la mortalité corrigée à J+12 et à J+14 ne doivent pas être prises en compte car la formule d'Abbott n'est valable que pour des mortalités chez le témoin inférieures à 30%. La mortalité corrigée des larves après traitement avec la souche Bb 147 atteint 27% au maximum 7 et 10 jours après inoculation.

La souche Bb 147 a un effet pathogène bien plus important envers *P. archon* qu'envers *Cydia pomonella* [27 % de mortalité corrigée pour le Carpocapse contre 70 à 80% pour *Paysandisia archon* 10 jours après l'inoculation (non représenté)]. La souche du champignon *Beauveria bassiana* Bb 147 est donc beaucoup plus pathogène envers les larves de *Paysandisia archon* qu'envers celles du Carpocapse; et ce bien que *Cydia pomonella* soit plus proche phylogénétiquement *d'Ostrinia nubilalis,* l'hôte d'origine de la souche Bb 147, que du papillon du palmier.

**Tableau VI :** Détermination de la mortalité brute et corrigée des larves de *Plutella xylostella* inoculées avec la composition Bb 147 1/100

| modalité | Nb de jours après inoculation | Nb d'individus testés | % de larves vivantes | % de mortalité brute |
|---|---|---|---|---|
| Blanc de formulation 1/100 | 3 | 4 | 75.0% | 25.0% |
| | 7 | 4 | 50.0% | 50.0% |
| | 13 | 4 | 50.0% | 50.0% |
| Bb 147 1/100 | 3 | 14 | 85.7% | 14.3% |
| | 7 | 12 | 50.0% | 50.0% |
| | 13 | 12 | 33.3% | 66.7% |

La mortalité brute dans le témoin inoculé avec le blanc de formulation est très importante et atteint 50 % au 7ème jour après inoculation. Il est donc impossible de déterminer un pourcentage de mortalité corrigée à l'aide de la formule d'Abbott puisque celle-ci n'est utilisable que pour des mortalités de 30 % maximum dans les témoins.

Par conséquent un test du khi-deux ($\chi^2$) multinomial a été réalisé afin de comparer les pourcentages de larves vivantes dans le témoin et dans la modalité traitée, à chaque lecture, afin de tester l'uniformité de la répartition entre les deux modalités. A partir du pourcentage de larves vivantes dans chaque modalité, un pourcentage théorique est calculé, correspondant à la somme des pourcentages de larves vivantes dans toutes les modalités divisé par le nombre total de modalités. Le khi-deux est alors déterminé par l'intermédiaire de la formule suivante :

$$\chi^2 = \sum[(\% \text{ larves vivantes dans la modalité considérée} - \% \text{ théorique})^2 / \% \text{théorique}]$$

La valeur obtenue est comparée à la valeur lue dans la table du $\chi^2$ au seuil de 5 %.

On obtient les résultats suivants :

A J+3 : $X^2$=0.712 ; $X^2$ 0,05=3.841 ; ddl[1]=1 ; nombre de groupes = 1
A J+7 : $X^2$=0.000 ; $X^2$ 0,05=3.841 ; ddl=1 ; nombre de groupes = 1
A J+13 : $X^2$ =3.348 ; $X^2$ 0,05=3.841 ; ddl=1 ; nombre de groupes = 1
[1]ddl = degré de liberté.

Pour chaque lecture, le khi-deux calculé est inférieur au khi-deux théorique au seuil de 5%. Par conséquent, cela signifie que les pourcentages de larves vivantes ne diffèrent pas significativement entre le témoin et la modalité traitée. Aucun effet de la formulation de spores de la souche Bb 147 n'est donc observé sur les larves de *Plutella xylostella* par rapport au blanc de formulation.

Cette souche de *Beauveria bassiana* est donc peu, voire non pathogène vis-à-vis des larves de *Plutella xylostella*, pourtant plus proche phylogénétiquement de la Pyrale du maïs que de *Paysandisia archon*.

**4) Relation dose-effet entre la souche Bb 147 et la mortalité des larves de *P. archon***

Les exemples précédents ont notamment permis de montrer que la souche Bb 147 est pathogène envers *P. archon*.

Pour vérifier s'il existe une relation dose-effet entre la souche Bb 147 et la mortalité des larves de *P. archon*, les inventeurs ont testé l'effet sur les larves de *Paysandisia archon* d'une gamme de dilutions dans l'eau (dilutions au 1/10, 1/30, 1/100, 1/300 et au 1/1000) d'une solution mère comprenant $6,89.10^{12}$ spores viables de Bb 147 par litre d'un mélange huile/émulgateur.

Des larves de *Paysandisia archon* âgées de 1 à 29 jours sont réparties dans six groupes reproduisant la variabilité d'âge de l'échantillon total, puis chaque groupe est testé avec une dilution comme indiqué dans le Tableau VII.

**Tableau VII :** répartition des dilutions testées dans les groupes de larves étudiés

| Groupe | Dilution | Nombre de larves testées |
|---|---|---|
| **Groupe 1 (témoin)** | eau | 20 |

(suite)

| Groupe | Dilution | Nombre de larves testées |
|---|---|---|
| **Groupe 2** | 1/10 | 20 |
| **Groupe 3** | 1/30 | 21 |
| **Groupe 4** | 1/100 | 24 |
| **Groupe 5** | 1/300 | 25 |
| **Groupe 6** | 1/1000 | 22 |

Le dénombrement des larves mortes ainsi que le calcul du pourcentage de mortalité brute et corrigée sont effectués comme indiqué dans l'Exemple I.6.

Les résultats sont représentés dans le Tableau VIII.

**Tableau VIII :** Relation dose-effet de la pathogénicité de Bb 147 envers la larves de *P. archon*

| Groupe | Nombre de jours après inoculation | % Mortalité brute | % Mortalité corrigée |
|---|---|---|---|
| Groupe 1 (Témoin) | 0 | 0,0% | |
| | 3 | 0,0% | |
| | 5 | 0.0% | |
| | 7 | 0,0% | |
| | 10 | 0,0% | |
| | 12 | 0,0% | |
| | 14 | 0,0% | |
| | 17 | 0,0% | |
| | 21 | 0,0% | |
| | 24 | 0,0% | |
| | 26 | 0,0% | |
| Groupe 2 (1/10) | 0 | 0,0% | 0,0% |
| | 3 | 60,0% | 60,0% |
| | 5 | 90,0% | 90,0% |
| | 7 | 100,0% | 100,0% |
| | 10 | 100,0% | 100,0% |
| | 12 | 100,0% | 100,0% |
| | 14 | 100,0% | 100,0% |
| | 17 | 100,0% | 100,0% |
| | 21 | 100,0% | 100,0% |
| | 24 | 100,0% | 100,0% |
| | 26 | 100,0% | 100,0% |

(suite)

| Groupe | Nombre de jours après inoculation | % Mortalité brute | % Mortalité corrigée |
|---|---|---|---|
| Groupe 3 (1/30) | 0 | 0,0% | 0,0% |
| | 3 | 38,1% | 38,1% |
| | 5 | 66,7% | 66,7% |
| | 7 | 95,2% | 95,2% |
| | 10 | 95,2% | 95,2% |
| | 12 | 95,2% | 95,2% |
| | 14 | 95,2% | 95,2% |
| | 17 | 95,2% | 95,2% |
| | 21 | 100,0% | 100,0% |
| | 24 | 100,0% | 100,0% |
| | 26 | 100,0% | 100,0% |
| Groupe 4 (1/100) | 0 | 0,0% | 0,0% |
| | 3 | 16,7% | 16,7% |
| | 5 | 45,8% | 45,8% |
| | 7 | 83,3% | 83,3% |
| | 10 | 95,8% | 95,8% |
| | 12 | 95,8% | 95,8% |
| | 14 | 100,0% | 100,0% |
| | 17 | 100,0% | 100,0% |
| | 21 | 100,0% | 100,0% |
| | 24 | 100,0% | 100,0% |
| | 26 | 100,0% | 100,0% |
| Groupe 5 (1/300) | 0 | 0,0% | 0,0% |
| | 3 | 12,0% | 12,0% |
| | 5 | 24,0% | 24,0% |
| | 7 | 64,0% | 64, 0% |
| | 10 | 84,0% | 84,0% |
| | 12 | 88,0% | 88,0% |
| | 14 | 92,0% | 92,0% |
| | 17 | 92,0% | 92,0% |
| | 21 | 92,0% | 92,0% |
| | 24 | 96,0% | 96,0% |
| | 26 | 96,0% | 96,0% |

(suite)

| Groupe | Nombre de jours après inoculation | % Mortalité brute | % Mortalité corrigée |
|---|---|---|---|
| Groupe 6 (1/1000) | 0 | 0,0% | 0,0% |
| | 3 | 9,1% | 9,1% |
| | 5 | 13,6% | 13,6% |
| | 7 | 31,8% | 31,8% |
| | 10 | 45,5% | 45,5% |
| | 12 | 50,0% | 50,0% |
| | 14 | 50, 0% | 50,0% |
| | 17 | 54,5% | 54,5% |
| | 21 | 61,9% | 61,9% |
| | 24 | 66,7% | 66,7% |
| | 26 | 66,7% | 66, 7% |

Les larves inoculées avec la composition comprenant la plus forte concentration en spores Bb 147 (dilution au 1/10 ; groupe 2) ont une mortalité corrigée de 60% dès le 3ème jour, et 100% dès le 7ème jour après l'inoculation.

Lorsque les dilutions sont plus importantes, la mortalité corrigée diminue : elle dépasse 95% à partir du 7ème jour pour la dilution au 1/30, à partir du 10ème jour pour la dilution au 1/100, et à partir du 24ème jour pour la dilution au 1/300. La mortalité est encore plus faible pour la plus forte dilution, puisqu'elle atteint 50% au 12ème jour et atteint seulement 66,7% au dernier jour de l'étude.

Ces résultats montrent qu'il existe une relation dose-effet entre les spores de la souche Bb 147 et les larves de *Paysandisia archon.*

**EXEMPLE IV : Influence de l'âge des larves de *Paysandisia* archon sur leur sensibilité à la souche Bb 147 de *Beauveria bassiana***

Pour déterminer si l'âge de la larve de *Paysandisia archon* a une influence sur sa sensibilité vis-à-vis des spores de la souche Bb 147, l'expérience suivante a été réalisée :

Des larves de *Paysandisia archon* d'âges différents sont réparties dans quatre groupes, de façon à ce que dans chaque groupe la répartition des larves selon leur âge soit la même que dans le groupe de larves de départ. Les larves des groupes 1, 2, 3 et 4 sont inoculées respectivement avec le blanc de formulation pur (non-dilué), le blanc de formulation 1/100, la composition Bb 147 1/100, et une poudre de spores Bb 147 pures.

Aucune corrélation n'a pu être établie entre l'âge des larves au moment de l'inoculation et leur durée de vie. Ces résultats suggèrent que la virulence du champignon n'est pas influencée par l'âge des larves.

**EXEMPLE V : Efficacité de la souche Bb147 sur des larves de *P. archon* en conditions naturelles**

Pour tester l'efficacité de *Beauveria bassiana* en condition naturelle, des palmiers sont traités préventivement par la souche Bb 147, puis l'infestation a été testée sur des palmiers adultes en plein air.

20 palmiers de 5 à 6 ans, de l'espèce *Phoenix canariensis,* mesurant 30 à 35 cm de haut, sont répartis en quatre groupes de cinq individus, numérotés groupes 1 à 4. Les essais sont réalisés en plein air, à l'automne, dans des cages de type insect-proof® (Diatex).

Les palmiers sont traités préventivement à des doses variables de Bb 147 en formulation liquide. La solution mère de Bb 147 utilisée comprend $6,89.10^{12}$ spores viables par litre d'un mélange huile + émulgateur.

Des études préparatoires ont permis de déterminer que le volume d'eau nécessaire pour couvrir toute la surface foliaire au point de ruissellement est de 400 ml. Les palmiers sont donc traités avec 400 ml de la composition à tester comme indiqué dans le Tableau IX :

**Tableau IX :** Compositions comprenant la souche de Bb 147 utilisée pour le traitement préventif des palmiers

| Groupe | Composition testée | Evaluation du nombre de spores par arbre |
|---|---|---|
| groupe 1 (témoin) | 400 ml d'eau | 0 |
| groupe 2 | 0,2 ml de Bb147 dans 400 ml d'eau | $1,4.10^9$ |
| groupe 3 | 0,6 ml de Bb147 dans 400ml d'eau | $4,1.10^9$ |
| groupe 4 | 2,0 ml de Bb 147 dans 400 ml d'eau | $1,4.10^{10}$ |

Quelques heures après le traitement, 25 larves de *P. archon,* âgées de 36 à 43 jours, sont déposées sur le feuillage de chaque arbre, la couronne foliaire ayant eu le temps de sécher.

Résultats :

a) Taux d'attaque et mortalité corrigée

Les premiers dégâts visuels apparaissent au bout de trente jours. Ils se manifestent par l'apparition de sciure au point de pénétration de la larve. Les observations sont effectuées à J+39, c'est-à-dire 39 jours après le traitement.
Le taux d'attaques représente le pourcentage d'attaques par rapport au nombre de larves (25).
L'efficacité est déterminée selon la formule suivante :
Efficacité pour un groupe donné = (taux d'attaques du groupe témoin - taux d'attaque dudit groupe donné) / taux d'attaque du groupe témoin.
Les résultats sont représentés dans le Tableau X ci-après.

**Tableau X :** Détermination de l'efficacité de la souche Bb 147 sur la réduction du taux d'attaques des palmiers par les larves de *P. archon*

| Groupe | Attaques visible | Taux d'attaques | Efficacité |
|---|---|---|---|
| Groupe 1 (témoin) | 11 | 44% | |
| Groupe 2 | 6 | 24% | 45% |
| Groupe 3 | 3 | 12% | 73% |
| Groupe 4 | 1 | 4% | 91% |

A J+70 environ, les palmiers sont tronçonnés et dépiautés à la main pour trouver les larves survivantes ou leur cadavres à l'intérieur du végétal, et évaluer le niveau de dégâts pour chaque groupe de palmiers.
Les résultats sont illustrés dans le Tableau XI ci-après.

**Tableau XI :** Détermination des pourcentages de mortalité brute et corrigée des larves de *P. archon* après traitement préventif des palmiers par la souche Bb 147.

| | Chenilles survivantes | Attaques avortées | Attaques totales | Chenilles perdues | % Mortalité brute | % Mortalité corrigée |
|---|---|---|---|---|---|---|
| Groupe 1 | 13 | 3 | 16 | 9 | 19% | |
| Groupe 2 | 8 | 11 | 19 | 6 | 58% | 48% |
| Groupe 3 | 5 | 15 | 20 | 5 | 75% | 69% |
| Groupe 4 | 4 | 18 | 22 | 3 | 82% | 78% |

Les attaques sont les points de pénétration sur la couronne foliaire. Certaines attaques ont donné lieu à une galerie profonde dans laquelle la larve est toujours active. D'autres attaques ont été rapidement stoppées par la mort de la larve, sous l'effet insecticide de la souche Bb 147 ou bien pour des raisons indéterminées. Dans les galeries vides la capsule céphalique est couramment retrouvée. En revanche, très peu de cadavres sont retrouvés compte tenu de la durée de l'essai.
On observe très nettement un effet dose sur la mortalité des larves et le nombre d'attaques qui se poursuivaient au jour du dépiautage. Dans la modalité la plus forte (groupe 4), la mortalité avoisine les 80%.

Pour les groupes 2 et 3, toutes les larves retrouvées vivantes dans le végétal y sont entrées via la périphérie de la couronne foliaire, ce qui suggère que l'efficacité des composition testées sur ces groupes pourrait être améliorée en augmentant leur volume.

b) Taille des larves survivantes

La taille moyenne initiale des larves utilisées dans ces essais est de 10 à 12 mm.
Les larves retrouvées dans les palmiers dépiautés à J+70 sont mesurées et les résultats sont représentés dans le Tableau XII :

**Tableau XII :** Détermination de la taille des larves de *P. archon* survivantes après le traitement préventif des palmiers par des compositions comprenant la souche Bb 147

| Numéro de la larve | Groupe | Numéro du palmier | longueur (en mm) |
|---|---|---|---|
| 1 | Groupe 1 (témoin) | 1 | 35 |
| 2 | | 1 | 21 |
| 3 | | 1 | 14 |
| 4 | | 2 | 12 |
| 5 | | 2 | 17 |
| 6 | | 2 | 20 |
| 7 | | 3 | 20 |
| 8 | | 3 | 50 |
| 9 | | 3 | 20 |
| 10 | | 4 | 22 |
| 11 | | 4 | non mesurée |
| 12 | | 5 | 19 |
| 13 | | 5 | 20 |
| 14 | Groupe 2 | 1 | 22 |
| 15 | | 2 | 35 |
| 16 | | 2 | 27 |
| 17 | | 2 | 30 |
| 18 | | 3 | 15 |
| 19 | | 3 | 18 |
| 20 | | 3 | 35 |
| 21 | | 4 | 22 |
| 22 | Groupe 3 | 1 | 6 |
| 23 | | 1 | 6 |
| 24 | | 2 | 17 |
| 25 | | 3 | 11 |
| 26 | | 5 | 32 |
| 27 | Groupe 4 | 2 | 8 |
| 28 | | 2 | 14 |
| 29 | | 3 | 10 |
| 30 | | 5 | 10 |

Les larves survivantes retrouvées à J+70 dans le groupe 1 (témoin) et dans le groupe 2 (faible dose de Bb147) présentent une taille moyenne de 20 à 25 mm.

Dans les groupes 3 et 4, la taille des larves survivantes est de 10 à 15 mm.

L'ensemble de ces résultats montre que la souche Bb 147 de *Beauveria bassiana* présente une efficacité à deux niveaux, à savoir une efficacité directe sur la mortalité des larves, et une efficacité indirecte sur le retard de croissance.

**EXEMPLE VI : Récapitulatif des tests de pathogénicité sur** les **larves de *P. archon,* de *P. xylostella,* de *O. nubilalis* et de *C. pomonella***

Des tests du khi-deux ($X^2$) tels que décrits dans l'Exemple III.3 ont permis de comparer les pourcentages de larves vivantes, à chaque lecture, entre les larves inoculées avec la formulation témoin (blanc de formulation 1/100) et les larves inoculées avec la souche Bb 147 (formulation Bb 147 1/100) et ce pour les larves de *Paysandisia archon,* d'*Ostrinia nubilalis,* de *Cydia pomonella* et de *Plutella xylostella.* Des degré de pathogénicité de la souche Bb 147 envers les espèces testées ont ainsi été déterminés, environ 10 jours après inoculation.

Les résultats sont récapitulés dans le Tableau XIII suivant :

**Tableau XIII :**

| Souche testée | Organisme testé | Résultat du test du $X^2$ (comparaison entre la modalité testée et la modalité témoin) | Pathogénicité(*) |
|---|---|---|---|
| Bb 147 (*B. bassiana*) | *P.xylostella* | Pas de différence significative (p=0.05) | -/+ |
| Bb 147 (*B. bassiana*) | *C. pomonella* | Pas de différence significative (p=0.05) | -/+ |
| Bb 147 (B. *bassiana*) | *O. nubilalis* | Différence hautement significative (p=0,01) | + |
| Bb 147 (B. *bassiana*) | *P. archon* | Différence très hautement significative (p=0,001) | +++ |
| Bb GHA (*B. bassiana*) | *P. archon* | Différence très hautement significative (p=0,001) | +++ |
| (*)-/+ : peu ou pas pathogène<br>+ : pathogène<br>+++ : très pathogène | | | |

**BIBLIOGRAPHIE**

AGUILAR, L., MILLER J.Y., SARTO I MONTEYS V. 2001. A new lepidopteran family for the European fauna. SHILAP Revta. Lepid. 29 (113) : 86-87.

AQUINO DE MURO, M., METHA, S., MOORE, D. 2003. The use of amplified fragment length polymorphism for molecular analysis of Beauveria bassiana isolâtes from Kenya and other countries, and their corrélation with host and geographical origin. FEMS Microbiology Letters. 229 : 249-257.

BARTLETT M.C. & JARONSKI S.T. 1988. Mass production of entomogenous fungi for biological control of insects. In : Fungi in Biological Control Systems. Manchester, UK. 61-85.

Darazy-Choubaya. 2002. La perception gustative des phytoectdystéroïdes par les larves de la pyrale du maïs, Ostrinia nubisalis Hübner (Lepidoptera, Pyralidae) ; Thèse INA-PG ; Paris ; 149pp

DRESCHER, J. & DUFAY, A. 2002 Importation of mature palms : a threat to native and exotic palms in Mediterranean countries ? Journal of the International Palm Society. 46(4).

FENG, M.G., POPRAWSKI, T.J., KHACHATOURIANS, G.G. 1994. Production, formulation and application of the entomopathogenic fungus Beauveria bassiana for Insect Control: current status. Biocontrol Science and Technology. 4 : 3-34.

FIGUEIREDO, M.S.F., MARQUES, E.J., DE LIMA, R.O.R., DE OLIVEIRA, J.V. 2002. Seleçao de isolados de Beauveria bassiana (Bals.) Vuill. e Metarhizium anisopliae (Metsch.) Sorok. Contra a Broca gigante de Cana-de-Açucar Castnia licus (Drury) (Lepidoptera ; Castniidae). Neotropical Entomology. 31(2) : 397-403.

Fornelli F., ET AL., 2004. Journal of Invertebrate Pathology, 85(2) : 74-79.

GAFUROVA V.L., ET AL., 1980. Mikrobiologischeskii Zhurnal. 42(5) : 591-5. pine beauty moth, *Panolis flammea* (Lepidoptera : Noctuidae). Forest Ecology and Management. 149 : 275-281.

HUMBER, R.A. & HANSEN, K.S. 2005. ARSEF index: Host by Fungus. 28 pp. http://arsef.fpsnl.cornell.edu/mycol-

**EP 2 096 926 B1**

ogy/ARSEF_ Culture Collection.html

MONTAGUD ALARIO, S. 2004. Paysandisia archon (Burmeister, 1880) (Lepidoptera, Castniidae), nuevas localizaciones en la Peninsula Ibérica y su gestión. Bol S.E.A. 34 : 237-246.

MOORE, D and PRIOR, C. 1993. The potential of mycoinsecticides. Biocontrol News and Information. 14(2): 31N-40N.

SARTO I MONTEYS, V. & AGUILAR, L. 2005. The Castniid Palm Borer, Paysandisia archon (Burmeister, 1880), in Europe : comparative biology, pest status and possible control methods (Lepidoptera : Castniidae). NEVA Nachrichten Entomologischen Vereins Apollo. 26(1/2) : 61-94.

SENDER C. 1970. Elevage du Carpocapse des pommes sur un nouveau milieu artificiel d'élevage non spécifique. Ann. Zool. Anim. 2(I), pages 93-95.

## Revendications

1. Utilisation d'un champignon entomopathogène de l'espèce *Beauveria bassiana* comme moyen de lutte biologique contre *Paysandisia archon.*

2. Utilisation d'un champignon entomopathogène de l'espèce *Beauveria bassiana* pour le traitement d'au moins un végétal contre une infestation par *Paysandisia archon.*

3. Utilisation, selon la revendication 1 ou la revendication 2, **caractérisée en ce que** ledit champignon est sélectionné dans le groupe constitué par la souche de *Beauveria bassiana* déposée auprès de la Collection Nationale de Cultures de Microorganismes (C.N.C.M.) sous le numéro I-867 le 7 juin 1989, la souche de *Beauveria bassiana* déposée à la C.N.C.M. sous le numéro 1-2960 le 3 décembre 2002, et la souche de *Beauveria bassiana* déposée auprès de l'ATCC (American Type Culture Collection) sous le numéro 74250 le 11 octobre 1993.

4. Utilisation selon l'une quelconque des revendications 1 à 3, **caractérisée en ce que** ledit champignon est sous forme de spores ou de mycélium.

5. Utilisation selon la revendication 4, **caractérisée en ce que** ledit champignon est sous forme de conidies

6. Utilisation selon l'une quelconque des revendications 1 à 5, **caractérisée en ce que** ledit champignon est utilisé en combinaison avec au moins un autre champignon entomopathogène.

7. Utilisation selon l'une quelconque des revendications 2 à 6, **caractérisée en ce que** ledit végétal est un palmier.

8. Utilisation selon la revendication.7, **caractérisée en ce que** ledit palmier est sélectionné dans le groupe constitué par les palmiers des genres *Trithrinax, Butia, Latania, Chamaerops, Phoenix, Livistona, Sabal, Trachycarpus* et *Washingtonia.*

9. Procédé de traitement d'un végétal contre une infestation par *Paysandisia archon* comprenant une étape consistant à mettre en contact ledit végétal avec un champignon entomopathogène de l'espèce *Beauveria bassiana.*

10. Procédé selon la revendication 9, **caractérisé en ce que** ledit champignon entomopathogène est tel que défini à la revendication 3.

11. Procédé selon la revendication 9 ou la revendication 10, **caractérisé en ce que** ledit champignon est sous forme de spores ou sous forme de mycélium.

12. Procédé selon la revendication 11, **caractérisé en ce que** ledit champignon est sous forme de conidies.

13. Procédé selon l'une quelconque des revendications 9 à 12, **caractérisé en ce que** ledit champignon est utilisé en combinaison avec au moins un autre champignon entomopathogène.

14. Procédé selon l'une quelconque des revendications 9 à 13, **caractérisé en ce que** ledit végétal est un palmier.

15. Procédé selon la revendication 14, **caractérisé en ce que** ledit palmier est sélectionné dans le groupe constitué par les palmiers des genres *Trithrinax, Butia, Latania, Chamaerops, Phoenix, Livistona, Sabal, Trachycarpus* et *Washingtonia.*

**Patentansprüche**

1.  Verwendung eines entomopathogenen Pilzes der Art *Beauveria bassiana* als Mittel zur biologischen Bekämpfung von *Paysandisia archon.*

2.  Verwendung eines entomopathogenen Pilzes der Art *Beauveria bassiana* zur Behandlung mindestens einer Pflanze gegen einen Befall durch *Paysandisia archon.*

3.  Verwendung nach Anspruch 1 oder Anspruch 2, **dadurch gekennzeichnet, dass** der Pilz aus der Gruppe ausgewählt ist, die von dem Stamm von *Beauveria bassiana* ausgewählt ist, hinterlegt bei der Collection Nationale de Cultures de Microorganismes (C.N.C.M.) unter der Nummer I-867 am 7. Juni 1989, dem Stamm von *Beauveria bassiana,* hinterlegt bei der C.N.C.M. unter der Nummer I-2960 am 3. Dezember 2002, und dem Stamm von *Beauveria bassiana,* hinterlegt bei der ATCC (American Type Culture Collection) unter der Nummer 74250 am 11. Oktober 1993.

4.  Verwendung nach einem der Ansprüche 1 bis 3, **dadurch gekennzeichnet, dass** der Pilz in Form von Sporen oder von Myzel ist.

5.  Verwendung nach Anspruch 4, **dadurch gekennzeichnet, dass** der Pilz in Form von Konidien ist.

6.  Verwendung nach einem der Ansprüche 1 bis 5, **dadurch gekennzeichnet, dass** der Pilz in Kombination mit mindestens einem anderen entomopathogenen Pilz verwendet wird.

7.  Verwendung nach einem der Ansprüche 2 bis 6, **dadurch gekennzeichnet, dass** die Pflanze eine Palme ist.

8.  Verwendung nach Anspruch 7, **dadurch gekennzeichnet, dass** die Palme aus der Gruppe ausgewählt ist, die von den Palmen der Arten *Trithrinax, Butia, Latania, Chamaerops, Phoenix, Livistona, Sabal, Trachycarpus* und *Washingtonia* gebildet ist.

9.  Verfahren zur Behandlung einer Pflanze gegen einen Befall durch *Paysandisia archon,* das einen Schritt umfasst, der darin besteht, die Pflanze mit einem entomopathogenen Pilz der Art *Beauveria bassiana* in Kontakt zu bringen.

10.  Verfahren nach Anspruch 9, **dadurch gekennzeichnet, dass** der entomopathogene Pilz nach Anspruch 3 ist.

11.  Verfahren nach Anspruch 9 oder Anspruch 10, **dadurch gekennzeichnet, dass** der Pilz in Form von Sporen oder von Myzel ist.

12.  Verfahren nach Anspruch 11, **dadurch gekennzeichnet, dass** der Pilz in Form von Konidien ist.

13.  Verfahren nach einem der Ansprüche 9 bis 12, **dadurch gekennzeichnet, dass** der Pilz in Kombination mit mindestens einem anderen entomopathogenen Pilz verwendet wird.

14.  Verfahren nach einem der Ansprüche 9 bis 13, **dadurch gekennzeichnet, dass** die Pflanze eine Palme ist.

15.  Verfahren nach Anspruch 14, **dadurch gekennzeichnet, dass** die Palme aus der Gruppe ausgewählt ist, die von den Palmen der Arten *Trithrinax, Butia, Latania, Chamaerops, Phoenix, Livistona, Sabal, Trachycarpus* und *Washingtonia* gebildet ist.

**Claims**

1.  The use of an entomopathogenic fungus of the species *Beauveria bassiana* as means for the biological control of *Paysandisia archon.*

2.  The use of an entomopathogenic fungus of the species *Beauveria bassiana* for the treatment of at least one plant against infestation with *Paysandisia archon.*

3. The use according to claim 1 or claim 2, **characterized in that** said fungus is selected from the group consisting of the *Beauveria bassiana* strain deposited with Collection Nationale de Culture de Microorganismes (C.N.C.M.) under number I-867 on 7 June 1989, the *Beauveria bassiana* strain deposited with C.N.C.M. under number I-2960 on 3 December 2002 and the *Beauveria bassiana* strain deposited with the American Type Culture Collection (ATCC) under number 74250 on 11 October 1993.

4. The use according to any one of claims 1 to 3, **characterized in that** said fungus is in the form of spores or mycelium.

5. The use according to claim 4, **characterized in that** said fungus is in the form of conidia.

6. The use according to any one of claims 1 to 5, **characterized in that** said fungus is used in combination with at least one other entomopathogenic fungus.

7. The use according to any one of claims 2 to 6, **characterized in that** said plant is a palm.

8. The use according to claim 7 **characterized in that** said palm is selected from the group consisting of palms of the genera *Trithrinax, Butia, Latania, Chamaerops, Phoenix, Livistona, Sabal, Trachycarpus* and *Washingtonia.*

9. A method for treating a plant against infestation with *Paysandisia archon* comprising a step to contact said plant with an entomopathogenic fungus of the species *Beauveria bassiana.*

10. The method according to claim 9, **characterized in that** said entomopathogenic fungus is such as defined in claim 3.

11. The method according to claim 9 or claim 10, **characterized in that** said fungus is in the form of spores or in the form of mycelium.

12. The method according to claim 11, **characterized in that** said fungus is in the form of conidia.

13. The method according to any one of claims 9 to 12, **characterized in that** said fungus is used in combination with at least one other entomopathogenic fungus.

14. The method according to any one of claims 9 to 13, **characterized in that** said plant is a palm.

15. The method according to claim 14, **characterized in that** said palm is selected from the group consisting of palms of the genera *Trithrinax, Butia, Latania, Chamaerops, Phoenix, Livistona, Sabal, Trachycarpus* and *Washingtonia.*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0228189 A
- US 5516513 A
- EP 1297746 A
- US 5227396 A
- FR 2648677
- US 5939065 A
- WO 9621358 A

**Littérature non-brevet citée dans la description**

- *Journal Officiel,* 21 Février 2002
- **AGUILAR, L. ; MILLER J.Y. ; SARTO I MONTEYS V.** A new lepidopteran family for the European fauna. *SHILAP Revta. Lepid.,* 2001, vol. 29 (113), 86-87
- **AQUINO DE MURO, M. ; METHA, S. ; MOORE, D.** The use of amplified fragment length polymorphism for molecular analysis of Beauveria bassiana isolâtes from Kenya and other countries, and their corrélation with host and geographical origin. *FEMS Microbiology Letters,* 2003, vol. 229, 249-257
- **BARTLETT M.C. ; JARONSKI S.T.** Mass production of entomogenous fungi for biological control of insects. *In : Fungi in Biological Control Systems,* 1988, 61-85
- **DARAZY-CHOUBAYA.** La perception gustative des phytoectdystéroïdes par les larves de la pyrale du maïs. *Ostrinia nubisalis Hübner,* 2002, 149pp
- **DRESCHER, J. ; DUFAY, A.** Importation of mature palms : a threat to native and exotic palms in Mediterranean countries ?. *Journal of the International Palm Society,* 2002, vol. 46 (4
- **FENG, M.G. ; POPRAWSKI, T.J. ; KHACHATOURIANS, G.G.** Production, formulation and application of the entomopathogenic fungus Beauveria bassiana for Insect Control: current status. *Biocontrol Science and Technology,* 1994, vol. 4, 3-34
- **FIGUEIREDO, M.S.F. ; MARQUES, E.J. ; DE LIMA, R.O.R. ; DE OLIVEIRA, J.V.** Seleçao de isolados de Beauveria bassiana (Bals.) Vuill. e Metarhizium anisopliae (Metsch.) Sorok. Contra a Broca gigante de Cana-de-Açucar Castnia licus (Drury) (Lepidoptera ; Castniidae). *Neotropical Entomology,* 2002, vol. 31 (2), 397-403
- **FORNELLI F. et al.** *Journal of Invertebrate Pathology,* 2004, vol. 85 (2), 74-79
- **GAFUROVA V.L. et al.** *Mikrobiologischeskii Zhurnal,* 1980, vol. 42 (5), 591-5
- *Forest Ecology and Management,* vol. 149, 275-281
- **HUMBER, R.A. ; HANSEN, K.S.** *ARSEF index: Host by Fungus,* 2005, 28, http://arsef.fpsnl.cornell.edu/mycology/ARSEF_ Culture Collection.html
- **MONTAGUD ALARIO, S.** Paysandisia archon (Burmeister, 1880) (Lepidoptera, Castniidae), nuevas localizaciones en la Peninsula Ibérica y su gestión. *Bol S.E.A.,* 2004, vol. 34, 237-246
- **MOORE, D ; PRIOR, C.** The potential of mycoinsecticides. *Biocontrol News and Information,* 1993, vol. 14 (2), 31N-40N
- **SARTO I MONTEYS, V. ; AGUILAR, L.** The Castniid Palm Borer, Paysandisia archon (Burmeister, 1880), in Europe : comparative biology, pest status and possible control methods (Lepidoptera : Castniidae). *NEVA Nachrichten Entomologischen Vereins Apollo,* 2005, vol. 26 (1/2), 61-94
- **SENDER C.** Elevage du Carpocapse des pommes sur un nouveau milieu artificiel d'élevage non spécifique. *Ann. Zool. Anim.,* 1970, vol. 2 (I), 93-95